Europäisches Patentamt

European Patent Office

Office européen des brevets

(11) Publication number: **0 223 948 B1**

# EUROPEAN PATENT SPECIFICATION

(45) Date of publication of patent specification: **15.05.91**   (51) Int. Cl.⁵: **G01N 27/28**

(21) Application number: **86112668.8**

(22) Date of filing: **13.09.86**

(54) **Electrode measuring system.**

(30) Priority: **28.10.85 SE 8505076**

(43) Date of publication of application:
**03.06.87 Bulletin 87/23**

(45) Publication of the grant of the patent:
**15.05.91 Bulletin 91/20**

(84) Designated Contracting States:
**BE CH DE FR GB IT LI NL**

(56) References cited:
**FR-A- 2 335 842**

**PATENT ABSTRACTS OF JAPAN, vol. 10, no. 371 (P-526)[2428], 11th December 1986; & JP-A-61 165 662**

(73) Proprietor: **GAMBRO AB**
**Post Box 10101**
**S-220 10 Lund(SE)**

(72) Inventor: **Clarén, Jan**
**Protokollgränden 38**
**S-222 47 Lund(SE)**

(74) Representative: **Boberg, Nils Gunnar Erik**
**Gambro AB Patent Department Box 10101**
**S-220 10 Lund(SE)**

## Description

### TECHNICAL FIELD

The present invention relates to an electrode measuring system comprising a measuring electrode and a seat co-operation with the same during the measurement, the measuring electrode comprising one or more electrode surfaces and the seat comprising an inlet and an outlet for a fluid, a physical characteristic of which is to be measured, and a connection duct between the said inlet and outlet, the measuring electrode and the seat being designed with two surfaces sealing against each other which between them form at least a part of the said duct which runs past the said electrode surface or electrode surfaces, a membrane being arranged between the said surfaces sealing against each other in order to separate the electrode surfaces from said fluid.

The invention is intended primarily to be used in connection with the measurement of a low-molecular compound which is dialyzed out of a more complex mixture in such a manner as is described in more detail, for example in the American patents 4 123 353, 4 229 542 and 4 266 021 and the European patent application published under No EP 0 102 458. However, it will be clear to those versed in the art, that it can also be applied more generally.

Reference is also being made to US patent 4 092 233 which is describing a electrode of the above mentioned kind.

### BACKGROUND ART

In the above mentioned publications a system of analysis primarily intended for measuring glucose is described in greater detail. The system can be used, for example, for measuring the glucose content in the blood of a diabetic patient. In this case the blood is passed from the patient to a dialyzer where a small part of the glucose is dialyzed out into a dialysis fluid which is passed via an enzyme reactor to a $pO_2$ electrode which up to now was constituted of a typcial Clark electrode. Such an electrode normally comprises a platinum electrode (cathode) which is biased to approx. 0.7 V relatively to an Ag-AgCl electrode (anode) which serves as a reference electrode.

The electrodes are normally immersed in a solution or gel which consists on the one hand of a phosphate-buffer to keep the pH constant, on the other hand of KCl to stabilize the electrode potential of the anode.

A membrane which usually consists of polypropylene separates the sample from the electrode system, but is permable for oxygen gas molecules. The number of oxygen gas molecules which penetrate through the membrane is directly proportional to the $pO_2$ in the test sample.

The oxygen furnished is represented at the cathode according to the formula:

$$2O_2 + 4e^- \rightarrow 2O_2^{-2}$$

and an electric current which is proportional to the number of oxygen gas molecules, and consequently to the $pO_2$ of the test sample, is generated in the cell.

In the absence of oxygen too, a certain current flows through the electrode because of the gel.

Between the measurements too the electrode is maintained polarized by means of voltage of approx. 0.7 V. The polarisation should not be reversed.

The handling of conventional Clark electrodes is relatively complicated, especially in connection with the exchange of membrane and gel. Moreover the certainty of measurement is not always satisfactory, especially when the measuring electrode is in connection with a larger measuring chamber within which $pO_2$ may vary, at the same time as the measuring result may be disturbed by microbubbles.

### DISCLOSURE OF INVENTION

It is the object of the present invention to eliminate the above mentioned problems and this is done partly through modification of parts co-operating with the electrode.

The invention thus relates to an electrode measuring system comprising a measuring electrode and a seat co-operating with it during the measurement, the measuring electrode comprising one or more electrode surfaces, and the seat comprising an inlet and an outlet for a fluid, a physical characteristic of which is to be measured, and a connecting duct between the said inlet and outlet, the measuring electrode and the seat being designed with two surfaces sealing against each other which between them form at least a part of the said duct which runs past the said electrode surface or electrode surfaces, a membrane being arranged between said surfaces sealing against each other in order to separate the electrode surfaces from the said fluid.

More particularly, the invention is characterized by a quantity of gel arranged between the measuring electrode and the membrane being so small that during the measurement it is forced out almost completely by the surfaces sealing against each other and is concentrated before the duct whilst there is a certain penetration of the membrane into the same.

It is evident from the above that the invention can be applied not only to Clark electrodes but also to electrode measuring systems comprising other electrodes. In such systems too the advantage essential to the invention can be gained of imparting to the fluid sample a forced flow past the electrode surfaces present. As a result the risk of variations within the test sample is reduced, at the same time as any microbubbles are effectively washed away.

The surface sealing against each other are appropriately dish-shaped. Such a design facilitates the sealing, at the same time as it takes good care of any membrane present.

In a preferred embodiment the measuring electrode comprises a central first electrode surface surrounded by, but insulated from, a second annular electrode surface, the said inlet being arranged straight before the central electrode surface and the said duct being arranged to run along a substantial part of the annular electrode surface. Such a design can be said to constitute a modification of the Clark electrode, but it has the advantage compared to the Clark electrode, as mentioned above, of having a forced flow towards, or along, the electrode surfaces.

Appropriately a cross-sectional surface is chosen for the said inlet which is of the same size as that of the central electrode surface.

A Clark-like electrode is aimed at with a membrane arranged between the said surfaces sealing against each other in order to separate the electrode surfaces from the said fluid.

The said duct is arranged preferably in the surface of the seat. It can also be formed, though, by adapting the membrane so that it is pressed into a duct provided on the actual measuring electrode which for the rest is filled with a gel.

In a preferred embodiment the membrane fixed to a rodshaped measuring electrode is stretched over the said sealing surface and the said electrode surface or electrode surfaces with the help of an elastic sealing ring arranged in an annular groove in the measuring electrode itself. Such a simple construction facilitates in particular the exchange of membrane and gel.

## BRIEF DESCRIPTION OF DRAWING

The invention will be described in the following in greater detail with reference to the attached drawings.

Fig 1 shows a preferred embodiment of the measuring system in accordance with the invention.

Fig 2 shows the seat included in the measuring system according to Fig 1 seen from the top.

Fig 3 finally shows a section through the same seat and through the front part of the actual measuring electrode.

## BEST MODE OF CARRYING OUT THE INVENTION

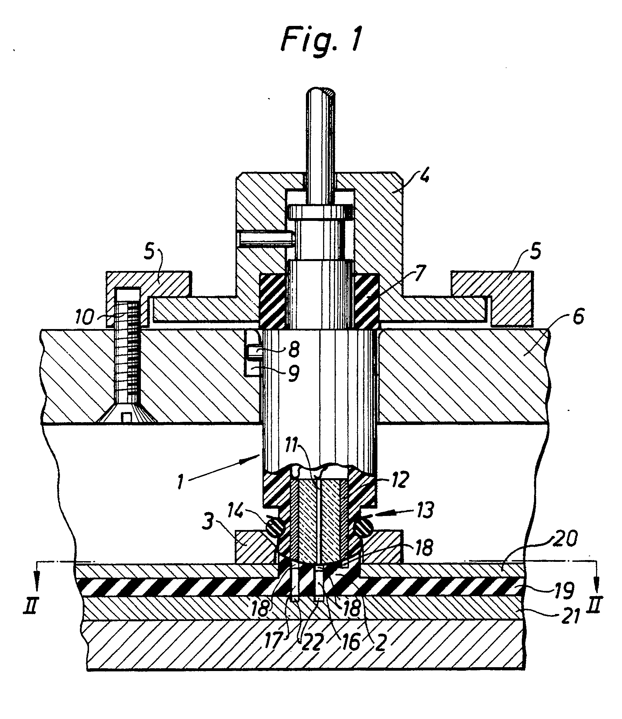

In Fig 1 is thus shown a preferred embodiment of the electrode measuring system in accordance with the invention comprising a measuring electrode and a seat 2 co-operating with the same during the measurement. The seat is surrounded by a guide ring 3 which is intended to assure that the electrode 1 obtains a correct position in relation to the seat 2. The electrode 1 is arranged in a holder 4, with the help of which it can be secured in respect of fastening devices provided on a monitor front 6, of which thus only a small part is shown. By means of a spring 7 which may consist, for example, of a compressible silicone material or a mechanical compression spring, the electrode 1 is pressed against the seat 2. To safeguard further the position of the electrode 1 in relation to the seat 2,and to prevent, moreover, any twisting between these two parts, there is a guide pin 8, adapted to project into a guide groove 9 in the monitor front 6. In this front there are, moreover, screws 10, of which only one is shown, for the retaining of the fastening devices 5.

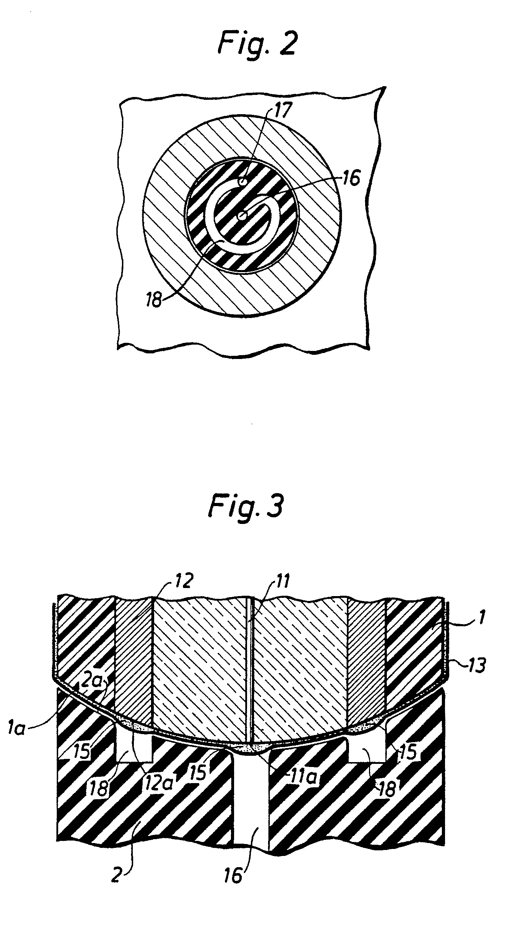

Essentially in the same manner as in a conventional electrode of the Clark-type the electrode shown comprises a central platinum electrode 11 and an annular Ag-AgCl electrode 12 surrounding the same. The electrodes are separated from the fluid test sample and from the seat 2 with the help of an O-ring 14. As is shown more clearly in Fig 3 a gel 15 is shut in between the membrane and the electrodes 11 and 12. In all Figures the inlet for the fluid sample is designated 16 and the outlet for the same 17. They are combined in turn by a partly circular duct 18.

Figure 3 shows in more detail the contacts between electrodes 1 and seat 2 which rest against each other during the measurement with the sealing surfaces 1a and 2a respectively. The front sealing surface 1a of the electrode 1 passes over smoothly, as shown in the Figure, into the effective electrode surfaces 12a and 11a of the electrodes 12 and 11 respectively. As mentioned above, both the electrode surface 1a and the seat surface 2a are dish-shaped which on the one hand facilitates the manufacture and on the other hand takes good care of the membrane 13.

The seat 2 may constitute a part of a larger cassettelike arrangement which is described more closely in the aforementioned European patent application EP 0 102 458. The seat in such a case consists of an elastic rubberlike plate 19 arranged between an outer rigid plate 20 and an inner rigid plate 21 provided with ducts 22 for the conductiong of the test sample to and from the actual measuring electrode. This plate 21, as described more closely in the abovementioned European patent application, appropriately contains further ducts for passing the test sample between different processing stations and also ducts for the conducting of further fluids, such as for example blood and/or calibrating solution.

Naturally the invention is not limited only to the embodiment described above but can be varied within the scope of the following claims. Thus it is possible, for example to vary details included both in respect of design and of function.

## Claims

1. An electrode measuring system comprising a measuring electrode (1) and a seat (2) co-operating with the same during the measurement, the measuring electrode (1) comprising one or more electrode surfaces (11a,12a), and the seat (2) comprising an inlet (16) and an outlet (17) for a fluid, a physical characteristic of which is to be measured, and a connecting duct (18) between the said inlet and outlet, the measuring electrode (1) and the seat (2) being designed with two surfaces (1a,2a) sealing against each other which between them form at least a part of the said duct (18) which runs past the said electrode surface or electrode surfaces (11a, 12a), a membrane (13) being arranged between the said surfaces (1a,2a) sealing against each other in order to separate the electrode surfaces (11a, 12a) from the said fluid, **characterized** by a quantity of gel (15) arranged between the measuring electrode (1) and the membrane (13) being so small that during the measurement it is forced out almost completely by the surfaces (1a,2a) sealing against each other and is concentrated before the duct (18) whilst there is a certain penetration of the membrane (13) into the same.

2. A measuring system in accordance with claim 1, **characterised** in that the surfaces (1a,2a) sealing against each other are of dished design.

3. A measuring system in accordance with claim 1 or 2, **characterized** in that the mesuring electrode (1) comprises a central first electrode surface (11a) surrounded by, but insulated against, a second annular electrode surface (12a), the said inlet (16) being arranged straight before the central electrode surface (11a) and the said duct (18) being arranged to run along a substantial part of the annular electrode surface (12a).

4. A measuring system in accordance with claim 3, **characterized** in that the said duct (18) and the said annular electrode surface (12a) have substantially the same width.

5. A measuring system in accordance with claim 3 or 4, **characterized** in that the said inlet (16) has a cross-sectional surface of substantially the same size as that of the central electrode surface (11a).

6. A measuring system in accordance with anyone of the preceding claims, **characterized** in that the said duct is arranged in the surface of the seat (2).

7. A measuring system in accordance with claim 1, **characterized** in that the said duct (18) is formed by adapting the membrane (13) so that it is partly pressed into a duct provided on the actual measuring electrode (1) which for the rest is filled with gel.

8. A measuring system in accordance with anyone of the preceding claims, **characterized** in that the membrane (13) fixed to a rod-shaped measuring electrode (1) is stretched over the said sealing surface (1a) and the said electrode surface or electrode surfaces (11a,12a) with the help of an elastic sealing ring (14) arranged in an annular groove in the measuring electrode.

## Revendications

1. Système de mesure à électrode comprenant une électrode de mesure (1) et un siège (2) qui coopère avec l'électrode pendant la mesure, l'électrode de mesure (1) présentant une ou plusieurs surfaces d'électrode (11a, 12a), et le siège (2) comportant une entrée (16) et une sortie (17) pour un fluide dont on veut mesurer une caractéristique physique, et un conduit de communication (18) entre ladite entrée et ladite sortie, l'électrode de mesure (1) et le siège (2) étant conçus avec deux surfaces (1a,2a) qui s'appliquent de façon étanche l'une contre l'autre et définissent entre elles au moins une partie du dit conduit (18) qui s'étend le long de ladite surface d'électrode ou des dites surfaces d'électrode (11a,12a), une membrane (13) étant disposée entre lesdites surfaces (1a,2a) s'appliquant l'une contre l'autre, afin de séparer les surfaces d'électrode (11a,12a) dudit fluide, caractérisé en ce que la quantité de gel (15) placée entre l'électrode de mesure (1) et la membrane (13) est assez petite pour que, pendant la mesure, elle soit chassée presque complètement par les surfaces (1a,2a) s'appliquant l'une contre l'autre et se concentre en face du conduit (18) en même temps qu'il y a une certaine pénétration de la membrane (13) dans le conduit.

2. Système de mesure suivant la revendication 1, caractérisé en ce que les surfaces (1a,2a) s'appliquant l'une contre l'autre sont en forme de cuvette.

3. Système de mesure suivant la revendication 1 ou 2, caractérisé en ce que l'électrode de mesure (1) comprend une première surface d'électrode centrale (11a) entourée par une deuxième surface d'électrode annulaire (12a) mais isolée de celle-ci, ladite entrée (16) étant située juste en face de la surface d'électrode centrale (11a) et ledit conduit (18) étant disposé de manière à s'étendre le long d'une partie importante de la surface d'électrode annulaire (12a).

4. Système de mesure suivant la revendication 3, caractérisé en ce que ledit conduit (18) et ladite surface d'électrode annulaire (12a) ont sensiblement la même largeur.

5. Système de mesure suivant la revendication 3 ou 4, caractérisé en ce que ladite entrée (16) a une surface de section transversale sensiblement de la même dimension que celle de la surface d'électrode centrale (11a).

6. Système de mesure suivant l'une quelconque des revendications précédentes, caractérisé en ce que ledit conduit est ménagé dans la surface du siège (2).

7. Système de mesure suivant la revendication 1, caractérisé en ce que ledit conduit (18) est formé par adaptation de la membrane (13) de sorte qu'elle est partiellement pressée dans un conduit prévu sur l'électrode de mesure elle-même (1), qui est pour le reste rempli de gel.

8. Système de mesure suivant l'une quelconque des revendications précédentes, caractérisé en ce que la membrane (13), fixée à une électrode de mesure en forme de tige (1), est tendue sur ladite surface d'étanchéité (1a) et ladite surface d'électrode ou lesdites surfaces d'électrode (11a,12a) à l'aide d'un anneau élastique d'étanchéité (14) disposé dans une gorge annulaire de l'électrode de mesure.

## Ansprüche

1. Elektrodenmeßsystem mit einer Meßelektrode (1) und einem Sitz (2), welcher mit jener während der Messung zusammenwirkt, wobei die Meßelektrode (1) eine oder mehrere Elektrodenoberflächen (11a, 12a) und der Sitz (2) einen Einlaß (16) und einen Auslaß (17) für ein Fluid aufweisen, von welchem eine physikalische Eigenschaft gemessen werden soll, und mit einem Kanal (18) zwischen dem Einlaß und dem Auslaß, wobei die Meßelektrode (1) und der Sitz (2) mit zwei Oberflächen (1a, 2a) ausgestaltet sind, die gegeneinander abdichten und die zwischeneinander zumindest einen Teil des Kanals (18) bilden, welche an der Elektrodenoberfläche oder den Elektrodenoberflächen (11a, 12a) vorbei verläuft, wobei eine Membran (13) zwischen den gegeneinander abdichtenden Oberflächen (1a, 2a) angeordnet ist, um die Elektrodenoberflächen (11a, 12a) von dem Fluid zu trennen, gekennzeichnet durch eine zwischen der Meßelektrode (1) und der Membran (13) angeordnete Gelmenge (15), die so klein ist, daß sie während der Messung fast vollständig durch die gegeneinander dichtenden Flächen (1a, 2a) herausgedrückt und vor dem Kanal (18) konzentriert wird, während dort ein gewisses Eindringen der Membran (13) in den Kanal stattfindet.

2. Meßsystem nach Anspruch 1, dadurch gekennzeichnet, daß die gegeneinander dichtenden Oberflächen (1a, 2a) von tellerförmiger Gestalt sind.

3. Meßsystem nach Anspruch 1 oder 2, dadurch gekennzeichnet, daß die Meßelektrode (1) eine zentrale erste Elektrodenoberfläche (11a) aufweist, die von einer zweiten ringförmigen Elektrodenoberfläche (12a) umgeben, jedoch gegenüber dieser isoliert ist, wobei der Einlaß (16) unmittelbar vor der zentralen Elektrodenoberfläche (11a) angeordnet ist und der Kanal (18) so angeordnet ist, daß er entlang eines beträchtlichen Teils der ringförmigen Elektrodenoberfläche (12a) verläuft.

4. Meßsystem nach Anspruch 3, dadurch gekennzeichnet, daß der Kanal (18) und die ringförmige Elektrodenoberfläche (12a) im wesentlichen die gleiche Breite haben.

5. Meßsystem nach Anspruch 3 oder 4, dadurch gekennzeichnet, daß der Einlaß (16) eine Querschnittsfläche hat, die im wesentlichen dasselbe Maß wie die zentrale Elektrodenoberfläche (11a) hat.

6. Meßsystem nach einem der vorstehenden Ansprüche, dadurch gekennzeichnet, daß der Kanal in der Oberfläche des Sitzes (2) angeordnet ist.

7. Meßsystem nach Anspruch 1, dadurch gekennzeichnet, daß der Kanal (18) durch Anpassung der Membran (13) gebildet wird, so daß sie teilweise in einen an der jeweiligen Meßelektrode (1) vorgesehenen Kanal gedrückt wird, der im übrigen mit dem Gel gefüllt ist.

8. Meßsystem nach einem der vorstehenden Ansprüche, dadurch gekennzeichnet, daß die an einer stabförmigen Meßelektrode (1) befestigte Membran (13) über die Dichtfläche (1a) und die Elektrodenfläche oder Elektrodenflächen (11a, 12a) mit Hilfe eines elastischen Ringes (14) gespannt wird, der in einer ringförmigen Nut in der Meßelektrode angeordnet ist.

# Fig. 1

## Fig. 2

## Fig. 3